Europäisches Patentamt

European Patent Office

Office européen des brevets

(19)

(11) Veröffentlichungsnummer: **0 255 847 B1**

(12) **EUROPÄISCHE PATENTSCHRIFT**

(45) Veröffentlichungstag der Patentschrift: **08.05.91**

(51) Int. Cl.⁵: **B23B  31/12**

(21) Anmeldenummer: **86117773.1**

(22) Anmeldetag: **19.12.86**

(54) **Bohrfutter, insbesondere Hammerbohrfutter.**

(30) Priorität: **05.08.86 DE 3626474**

(43) Veröffentlichungstag der Anmeldung:
**17.02.88 Patentblatt  88/07**

(45) Bekanntmachung des Hinweises auf die
Patenterteilung:
**08.05.91 Patentblatt  91/19**

(84) Benannte Vertragsstaaten:
**DE ES FR GB IT NL SE**

(56) Entgegenhaltungen:
**DE-A- 3 338 141**
**DE-A- 3 409 494**
**DE-C- 3 438 145**
**GB-A- 2 078 566**

(73) Patentinhaber: **Röhm, Günter Horst**
**Heinrich-Röhm-Strasse 50**
**W-7927 Sontheim(DE)**

(72) Erfinder: **Mack, Hans-Dieter, Dipl.-Ing.**
**Richard-Wagner-Strasse 11**
**W-7927 Sontheim(DE)**

(74) Vertreter: **Fay, Hermann, Dipl.-Phys. Dr.**
**Ensingerstrasse 21 Postfach 1767**
**W-7900 Ulm (Donau)(DE)**

## Beschreibung

Die Erfindung betrifft ein Bohrfutter, insbesondere Hammerbohrfutter, mit einem Futterkörper, der eine Werkzeugaufnahme für ein Bohrwerkzeug bildet, mit Futterbakken, die zentrisch zur Futterachse verstellbar sind und das Bohrwerkzeug in der Werkzeugaufnahme halten, ferner mit einem die Futterbacken betätigenden Backenstellglied, das koaxial am Futterkörper drehbar und axial unverschiebbar geführt ist, und mit einer Verstellhülse, die in einer am Futterkörper koaxialen Führung in zwei Betriebsstellungen einstellbar ist, von welchen in der einen das Backenstellglied frei verdrehbar und in der anderen gegen unerwünschte Verdrehungen gesichert ist.

Derartige Bohrfutter sind beispielsweise aus der DE-C-34 38 145 bekannt. Bei ihnen dient die Sicherung des Backenstellglieds gegen unerwünschte Verdrehungen dazu, während des Bohrbetriebs ein selbsttätiges Lockern oder Festziehen der Futterbacken zu verhindern, letzteres nämlich besonders dann, wenn beim Hammerbohren der Schaft des Bohrwerkzeugs axial nur lose zwischen den Futterbacken geführt ist, damit das Bohrwerkzeug ein axiales Verschiebungsspiel im Bohrfutter besitzt und die Schläge der Antriebsmaschine, an der das Bohrfutter Verwendung findet, voll am Bohrwerkzeug zur Wirkung kommen können. - Bei dem bekannten Bohrfutter ist die Verstellhülse axiale verschiebbar und undrehbar am Futterkörper geführt. Sie steht mit dem Backenstellglied unter axialem Federdruck formschlüssig über eine Verzahnung im Eingriff, deren Zähne sich am Backenstellglied und/oder an der Verstellhülse axial erstrecken, so daß sich die Zähne mehr oder weniger axial überlappen können und der Eingriff über einen größeren, der maximalen axialen Zahnlänge entsprechenden Verschiebungsbereich der Verstellhülse erhalten bleibt.

Aus der DE-A- 34 09 494 ist ein Bohrfutter bekannt, bei dem abweichend von Bohrfuttern der eingangs genannten Art die Verstellhülse nicht zum Blockieren oder Freigeben des Backenstellgliedes, sondern eines Döppers dient, der im freigegebenen Betriebszustand die Schläge der Antriebsmaschine auf den Schaft des Bohrwerkzeugs überträgt, während bei blockiertem Döpper ein rein drehendes Bohren möglich ist. Die Verstellhülse ist zwischen ihrer den Döpper freigebenden und der ihn blockierenden Betriebsstellung verdrehbar. Jedoch ist es mangels axialer Verschiebbarkeit der Verstellhülse nicht möglich, auch das Backenstellglied mit Hilfe der Verstellhülse zu sichern, wie es bei Bohrfuttern der eingangs genannten Art der Fall ist.

Bei beiden bekannten Bohrfuttern dient die Verstellhülse im übrigen dazu, eine im Futterkörper vorgesehene Schlüsselaufnahme zum Ansetzen eines das Bakkenstellglied betätigenden Spannschlüssels nur in derjenigen Betriebsstellung der Verstellhülse freizugeben, in der die Benutzung des Spannschlüssels betriebstechnisch sinnvoll ist und/oder keinen Schaden anrichten kann. Bei dem Bohrfutter nach der DE-C-34 38 145 entspricht dies dem Fall, daß die Verstellhülse außer Eingriff am Backenstellglied steht, bei dem Bohrfutter nach der DE-A- 34 09 494 dem Fall der Blockierung des Döppers.

Je nach Art solcher zusätzlicher Betriebsfunktionen der Verstellhülse kann es bei den bekannten Bohrfuttern der eingangs genannten Art stören, daß ihre Verstellhülse axial verschiebbar sein muß, um die Sicherung des Backenstellglieds bewirken zu können. Der Erfindung liegt daher die Aufgabe zugrunde, ein Bohrfutter der eingangs genannten Art so auszubilden, daß es zur Sicherung des Bakkenstellglieds gegen Verdrehungen keiner axialen Verstellbarkeit der Verstellhülse bedarf.

Diese Aufgabe wird nach der Erfindung dadurch gelöst, daß zur Sicherung des Backenstellglieds ein Sicherungshebel vorgesehen ist, der am Futterkörper um eine zur Futterachse etwa radiale Schwenkachse drehbar gelagert ist, und daß die zwischen ihren beiden Betriebsstellungen verdrehbare Verstellhülse für jede Drehrichtung mindestens einen Anschlag aufweist, der in der ihm zugeordneten Drehrichtung am Sicherungshebel zur Anlage kommt, wodurch die Verstellhülse beim Verdrehen den Sicherungshebel verschwenkt und in ihren Betriebsstellungen entweder ohne Verbindung oder im Form- und/oder Kraftschluß mit dem Backenstellglied hält.

Im Ergebnis dient bei dem erfindungsgemäßen Bohrfutter zur Sicherung des Backenstellglieds ein eigens dafür vorgesehenes Sicherungsglied, nämlich der Sicherungshebel, und die Verstellhülse nur noch zu dessen Betätigung und Einstellung sowie dazu, den Sicherungshebel in seiner Einstellung gegenüber dem Backenstellglied festzuhalten. Die Drehbewegung der Verstellhülse kann dabei je nach Ausbildung und Anordnung des Sicherungshebels und der an ihn angreifenden Anschläge in die jeweils am besten geeignete Hebelbewegung umgesetzt und auch mit einer Kraftübersetzung ausgestattet werden, so daß geringe Stellkräfte an der Verstellhülse genügen, den Sicherungshebel zu betätigen und in der das Backenstellglied sichernden Stellung festzuhalten. Unabhängig davon ermöglicht der Umstand, daß ein axialer Verschiebungsweg für die Verstellhülse entbehrlich ist, eine axiale kurze Baulänge für das Bohrfutter insgesamt.

Eine bevorzugte Ausführungsform der Erfindung ist dadurch gekennzeichnet, daß der Sicherungshebel als mindestens zweiarmiger Hebel ausgebildet ist und mit nur einem Hebelarm am Bakkenstellglied zum Angriff kommt. Der oder die anderen Hebelarme dienen dann allein der Hebelverstellung durch Anlage an den jeweils den Hebelarmen zugeordneten Anschlägen der Verstellhülse. Insbesondere entsteht dadurch die sehr vorteilhafte Möglichkeit, bei mehreren den Anschlägen der Verstellhülse zugeordneten Hebelarmen die Anschläge als die Drehbewegung des Sicherungshebels steuernde und ihn in seinen Endstellungen fixierende Auflaufkurven für die Hebelarme auszubilden. Besonders zweckmäßig können diese Auflaufkurven zunächst in Umfangsrichtung der Verstellhülse und geneigt zur Futterachse verlaufen und dann in zur Futterachse im wesentlichen senkrechten Kurvenabschnitten enden, welchen die Hebelarme in den beiden Betriebsstellungen der Verstellhülse axial anliegen. Der in diesen Betriebsstellungen stattfindende Kraftaustausch zwischen Sicherungshebel und Verstellhülse erfolgt somit ebenfalls axial und damit senkrecht zur Drehrichtung der Verstellhülse, so daß jedenfalls bei axial unverschiebbar am Futterkörper geführter Verstellhülse keine oder jedenfalls nur sehr geringe Stellkräfte an der Verstellhülse in deren Umfangsrichtung erforderlich sind, um den Sicherungshebel zuverlässig in seiner das Backenstellglied blockierenden oder freigebenden Stellung zu halten.

Im einzelnen besteht die Möglichkeit, daß Bakkenstellglied nur im Kraftschluß durch Reibung zu sichern. Eine hierfür zweckmäßige Ausführungsform ist dadurch gekennzeichnet, daß der am Bakkenstellglied angreifende Hebelarm eine zur Schwenkachse des Sicherungshebels exzentrische Klemmfläche zur kraftschlüssigen Anlage am Bakkenstellglied aufweist. Besser, weil zuverlässiger, ist eine formschlüssige Verbindung zwischen Bakkenstellglied und Sicherungshebel. Die insoweit bevorzugte Ausführungsform der Erfindung ist dadurch gekennzeichnet, daß der am Backenstellglied angreifende Hebelarm mit mindestens einem Sperrzahn versehen ist und damit formschlüssig in die Lücken eines am Backenstellglied vorgesehenen Zahnkranzes greift. Dann empfiehlt es sich insbesondere, die Anordnung so zu treffen, daß der am Backenstellglied angreifende Hebelarm als in der einen oder anderen Drehrichtung des Zahnkranzes wirkende Sperrklinke ausgebildet und dazu der Zahn in der betreffenden Drehrichtung vor der Schwenkachse des Sicherungshebels sitzt; eine Drehung des Backenstellglieds in dieser Richtung hat dann über den am Zahnkranz im Eingriff stehenden Sperrzahn ein Drehmoment auf den Sicherungshebel zur Folge, das den Sicherungshebel um seine Schwenkachse mit seinem Sperrzahn nur um so fester in den Zahnkranz drückt. Die auf den Futterkörper bezogene Drehrichtung des Zahnkranzes, in der der Sicherungshebel nach dem Eingriff im Zahnkranz selbsttätig als Sperrklinke sperrt, kann dabei nach Belieben gewählt und somit immer den jeweiligen konstruktiven und betrieblichen Gegebenheiten des Bohrfutters angepaßt werden.

Um im Fall von - aus welchen Gründen auch immer -auftretenden Überlastungen die Gefahr von Zerstörungenauszuschließen, kann der Sicherungshebel an geeigneter Stelle mit einer elastischen Verformbarkeit derart ausgestattet sein, daß der Kraft- und/oder Formschluß sich unter Verformung des Sicherungshebels löst, ehe Beschädigungen auftreten können. Eine insoweit besonders zweckmäßige Ausführungsform ist dadurch gekennzeichnet, daß der am Backenstellglied zum Angriff kommende Hebelarm etwa entgegen der Richtung des Eingriffs seines Sperrzahns in den Zahnkranz, also im wesentlichen quer zur Hebelarmachse elastisch biegbar ist. Unabhängig davon besteht die Möglichkeit, daß der den Sicherungshebel am Anschlag der Verstellhülse im Form-und/oder Kraftschluß mit dem Backenstellglied haltende Hebelarm in Richtung der vom Anschlag auf ihn ausgeübten Kraft elastisch biegbar ist. Im übrigen bieten solche elastischen Verformbarkeiten des Sicherungshebels den Vorteil, fertigungsbedingte Toleranzen auszugleichen und sicherzustellen, daß der einerseits im Form-und/oder Kraftschluß mit dem Backenstellglied stehende Sicherungshebel andererseits ohne Spiel dem zugeordneten Anschlag an der Verstellhülse anliegt. Eine solche Spielfreiheit kann aber auch ohne elastische Verformbarkeit des Sicherungshebels dadurch erhalten werden, daß der Sicherungshebel zumindest in der seinem Form- und/ oder Kraftschluß mit dem Backenstellglied entsprechenden Stellung unter der Kraft eines ihn in dieser Stellung haltenden Federgliedes steht. Für die Anordnung und Ausbildung eines solchen Federgliedes bestehen verschiedene Möglichkeiten. So kann das Federglied dieVerstellhülse in derjenigen Drehrichtung beaufschlagen, in der sie über ihren Anschlag den Sicherungshebel in die das Backenstellglied sichernde Stellung verschwenkt. In diesem Fall kann bei geeigneter Ausbildung das Federglied zugleich auch dazu dienen, eine Stellkraft zu erzeugen, welche die Verstellhülse in ihrer der Sicherung des Backenstellglieds entsprechenden Betriebsstellung am Futterkörper einrasten läßt. Eine andere vorteilhafte Ausführungsform ist dadurch gekennzeichnet, daß das Federglied unmittelbar zwischen dem Sicherungshebel und der Verstellhülse angeordnet ist. In diesem Fall kann das Federglied zweckmäßig als in Richtung der Futterachse wirkender und in dieser Richtung auf Biegung beanspruchter Federarm ausgebildet sein.

Konstruktiv ist die Anordnung im übrigen vorzugsweise so getroffen, daß in der Wand der Verstellhülse eine den Sicherungshebel aufnehmende Aussparung in Form einer Tasche und/oder eines Fensters vorgesehen ist, und daß die Anschläge für den Sicherungshebel von den Randwandungen der Tasche bzw. des Fensters gebildet sind. Die Verstellhülse kann dann zumindest teilweise den Sicherungshebel nach außen so abdecken, daß er bei Betätigung der Verstellhülse von Hand die Finger nicht einklemmen kann. Der Sicherungshebel kann an den Anschlägen unmittelbar mit seiner Randkontur oder mit eigens am Sicherungshebel vorgesehenen Vorsprüngen, wie Zapfen, Nocken oder dergl., zur Anlage kommen.

Die Verstellhülse kann außer zur Sicherung des Bakkenstellgliedes zur Ausführung auch anderer Betriebs-und Stellfunktionen dienen, wie es an sich bekannt und eingangs erwähnt worden ist. Vorzugsweise bietet sich dazu bei Bohrfuttern mit einer Schlüsselaufnahme im Futterkörper für einen das Backenstellglied betätigenden Futterschlüssel die Maßnahme an, daß in der Wand der Verstellhülse ein Fenster ausgespart ist, das die Schlüsselaufnahme nur in derjenigen Betriebsstellung der Verstellhülse freigibt, in der diese den Sicherungshebel ohne Verbindung mit dem Backenstellglied hält. Dadurch kann in einfacher Weise eine Betätigung des Backenstellglieds mit Hilfe des Futterschlüssels verhindert werden, so lange das Bakkenstellglied durch den Sicherungshebel gegen Verdrehen gesichert ist.

Im folgenden wird die Erfindung an in der Zeichnung dargestellten Ausführungsbeispielen näher erläutert; es zeigen:

Fig. 1      einen Axialschnitt durch ein Hammerbohrfutter nach der Erfindung,

Fig. 2      einen Querschnitt durch das Bohrfutter nach Fig. 1,

Fig. 3      eine teilweise Abwicklung des Bohrfutters nach Fig. 1 in der in Fig. 1 eingetragenen Schnittlinie III - III, und zwar in im Vergleich zu Fig. 1 stark vergrößerter Darstellung,

Fig. 3.1      den Gegenstand der Fig. 3 in vergrößerter Darstellung,

Fig. 3.2      den Gegenstand der Fig. 3.1 in einer anderen Betriebsstellung,

Fig. 4      den Gegenstand der Fig. 3 in einer anderen Ausführungsform,

Fig. 5      eine weitere Ausführungsform der Gegenstände nach Fig. 3 und 4,

Fig. 6.1      eine nochmals andere Ausführungsform der Gegenstände nach den Fig. 3 bis 5 in einem ersten Betriebszustand,

Fig. 6.2      den Gegenstand nach Fig. 6.1 in einem zweiten Betriebszustand,

Fig. 7      den Gegenstand nach den Fig. 6.1 und 6.2 in einer abgeänderten Ausführungsform.

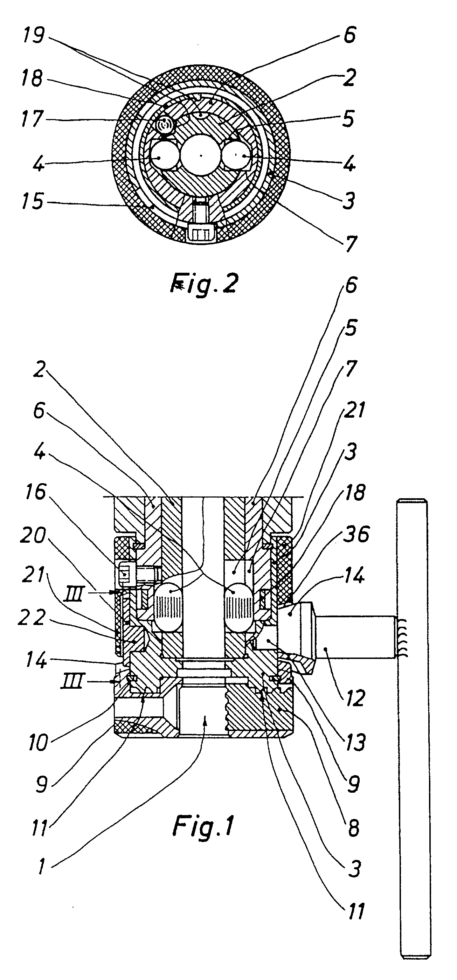

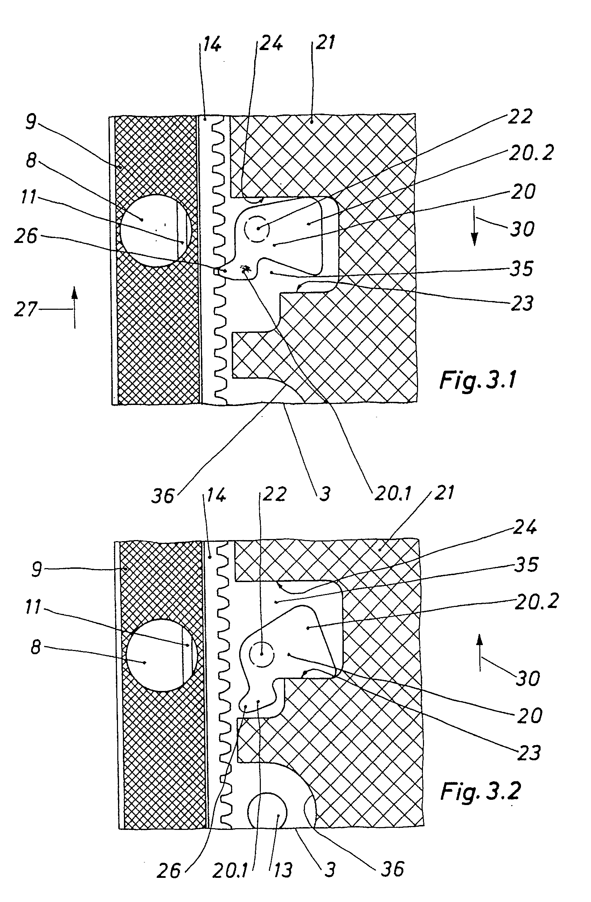

Das in den Fig. 1 und 2 dargestellte Hammerbohrfutter besitzt einen einerseits mit einer Werkzeugaufnahme 1 für das nicht dargestellte Bohrwerkzeug versehenen, andererseits an eine Bohrspindel 2 einer ebenfalls nicht dargestellten Bohrmaschine angeschlossenen Futterkörper 3, der axial zur Werkzeugaufnahme 1 hin durchbrochen ist, so daß beim Hammerbohren die Schlagwirkung eines in der hohlen Bohrspindel befindlichen, nicht dargestellten Schlaggliedes über einen ebenfalls nicht gezeigten Döpper unmittelbar auf das Ende des im Bohrfutter gehaltenen Bohrwerkzeuges übertragen werden kann. In Öffnungen 5 der Bohrspindel 2 befinden sich Mitnehmer 4, die radial durch Verdrehen einer Kupplungshülse 6 so verstellbar sind, daß sie - wie in der Zeichnung - aus der Werkzeugaufnahme 1 radial in Taschen 7 der Kupplungshülse 6 austreten oder von der Kupplungshülse 6 in die Werkzeugaufnahme 1 hineingedrückt werden. In letzterem Fall können sie in im Schaft des Bohrwerkzeugs vorgesehene Längsnuten greifen und dadurch dessen Drehmitnahme auch dann sicherstellen, wenn der Werkzeugschaft nur lose axial verschieblich zwischen den Futterbacken 8 geführt ist. Im ersteren Fall dagegen besteht die Möglichkeit, auch übliche glattschaftige, also ungenutete Bohrwerkzeuge nur zwischen den Futterbacken im Reibungsschluß, z. B. zum rein drehenden Bohren, zu spannen. Die diesen beiden Fällen entsprechenden Drehstellungen der Kupplungshülse 6 sind durch eine Rasteinrichtung festgelegt, die aus einer radial in der Kupplungshülse 6 verstellbar geführten Rastkugel 17 und einer sie beaufschlagenden, im Ausführungsbeispiel ringförmig ausgebildeten Rastfeder 18 und Rastaufnahmen 19 in der Bohrspindel 2 besteht, wobei die Rastfeder 18 die Rastkugeln 17 in die Rastaufnahmen 19 drückt. Am Futterkörper 3 ist ein Backenstellglied 9 drehbar und mittels eines bei 10 angedeuteten Federrings axial unverschiebbar geführt. Im Backenstellglied 9 sind die insgesamt drei Futterbacken 8 radial verstellbar geführt, wozu das Backenstellglied 9 Radialbohrungen aufweist, die zur Werkzeugaufnahme 1 hin offen sind und die als zylindrische Bolzen ausgebildeten Futterbacken 8 aufnehmen. Der Futterkörper 3 trägt an seiner den Futterbacken 8 zugewandten Stirnseite ein ebenes Spiralgewinde 11, in das die Futterbacken 8 mit entsprechenden ebenen spiraligen Gewindegangabschnitten eingreifen, die auf der dem Futterkörper 3 zugewandten Futterbackenseite vorgesehen sind. In der Zeichnung sind die Futterbacken 8 in ihrer radial äußersten Stellung gezeigt. Die Verdrehung des Backenstellglieds 9 und damit je nach Drehsinn die einwärts oder auswärts gerichtete Radialverstellung der Spannbacken 8 kann mit Hilfe eines am Futterkörper 3 ansetzbaren Futterschlüssels 12 erfolgen, der mit einem Führungszapfen in eine im Futterkörper 3 vorgesehene Schlüsselaufnahme 13 eingreift und ein Zahnritzel 14 aufweist, das bei am Bohrfutter angesetztem Futterschlüssel 13 in die Stirnverzahnung eines am Backenstellglied 9 ausgebildeten Zahnkranzes 14 eingreift. Ferner ist am Futterkörper 3 in einer koaxialen Führung eine Verstellhülse 21 vorgesehen, die durch einen Schlitz 15 im Futterkörper 3 hindurch über eine Schraube 16 mit der Kupplungshülse 6 in fester Verbindung steht und somit wie diese zwischen zwei Betriebsstellungen einstellbar ist. In der einen dieser Betriebsstellungen ist das Backenstellglied 9 frei verdrehbar und in der anderen gegen Verdrehungen gesichert, wobei der Sicherungsfall derjenigen Stellung der Kupplungshülse 6 entspricht, in der die Mitnehmer 4 radial in die Werkzeugaufnahme 1 hinein verstellt sind. Zu dieser Sicherung des Backenstellglieds 9 ist ein Sicherungshebel 20 vorgesehen, der am Futterkörper 3 um eine zur Futterachse etwa radiale Schwenkachse 22 drehbar gelagert ist. Die zwischen ihren beiden Betriebsstellungen verdrehbare Verstellhülse 21 ist mit Anschlägen 23, 24 versehen, von welchen in beiden Drehrichtungen je einer am Sicherungshebel 20 zur Anlage kommt und dadurch den Sicherungshebel 20 beim Verdrehen der Verstellhülse 21 verschwenken kann. Außerdem wird durch diese Anschläge 23, 24 in den beiden Betriebsstellungen der Verstellhülse 21 der Sicherungshebel 20 entweder ohne Verbindung oder im Form-und/oder Kraftschluß mit dem Bakkenstellglied 9 gehalten.

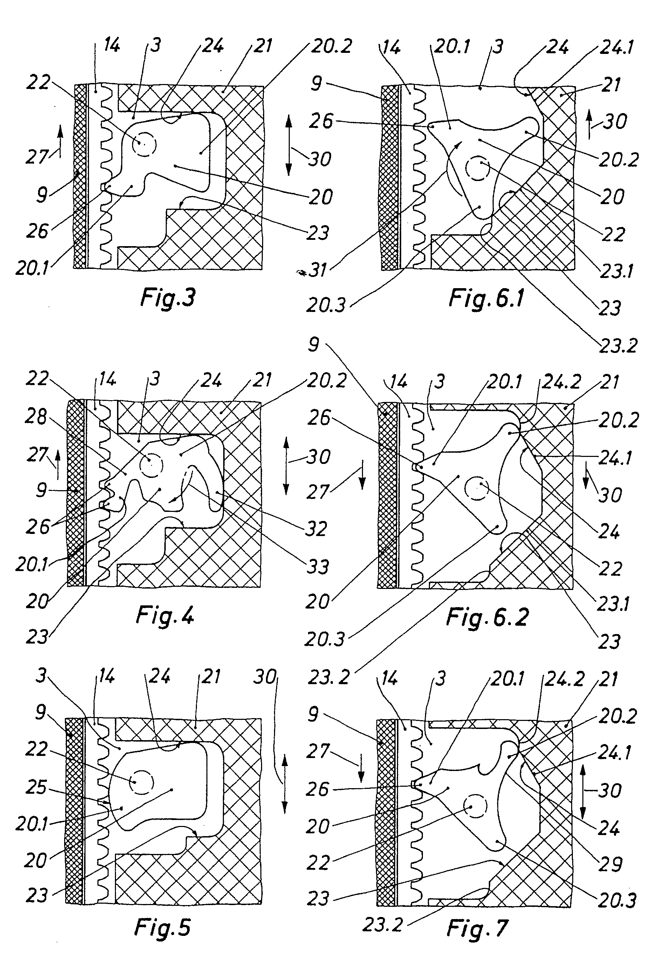

Im einzelnen ist der Sicherungshebel 20 als zweiarmiger (Fig. 1 bis 5) oder dreiarmiger (Fig. 6 bis 7) Hebel ausgebildet und kommt mit jeweils nur einem einzigen Hebelarm 20.1 am Backenstellglied 9 zum Angriff.

Dieser Angriff kann einen reinen Kraftschluß mit dem Backenstellglied 9 ergeben, wie bei der Ausführungsform nach Fig. 5, wo der am Backenstellglied 9 angreifende Hebelarm 20.1 eine zur Schwenkachse 22 des Sicherungshebels 20 exzentrische Klemmfläche 25 zur kraftschlüssigen Anlage am Backenstellglied 9 aufweist. Der am Backenstellglied 9 angreifende Hebelarm 20.1 kann aber auch mit mindestens einem Sperrzahn 26 versehen sein und damit formschlüssig in die Lücken des am Backenstellglied 9 vorgesehenen Zahnkranzes 14 eingreifen, wie dies die Fig. 1 bis 4 und 6.1 bis 7 zeigen. Insbes. kann dabei der am Backenstellglied 9 angreifende Hebelarm 20.1 als in der einen oder anderen Drehrichtung des Zahnkranzes 14 wirkende Sperrklinke ausgebildet sein, wie dies die Fig. 3 und 4 sowie 6.1 und 6.2 zeigen. Dazu ist der Zahn 20.1 in der betreffenden Drehrichtung gegenüber der Schwenkachse 22 des Sicherungshebels 20 vorversetzt. Im Ergebnis führt der Sicherungshebel 20 zur selbsttätigen Sperrung, wenn bei im Zahnkranz 14 eingegriffenem Sicherungshebel 20 das Backenstellglied 9 mit dem Zahnkranz 14 in Richtung des in den Figuren eingetragenen Pfeiles 27 gegenüber dem Futterkörper 3 verdreht werden sollte. Um dabei Zerstörungen im Fall von Überbeanspruchungen und Überlastungen zu verhindern, kann der am Backenstellglied 9 zum Angriff kommende Hebelarm 20.1 ungefähr entgegen der Richtung des Eingriffs seines Sperrzahns 26 in den Zahnkranz 14, also im wesentlichen quer zur Hebelarmachse, elastisch biegbar sein, wie dies im Beispiel der Fig. 4 bei 28 durch eine Querschnittsverengung des Hebelarms 20.1 angedeutet ist. Stattdessen oder auch ergänzend besteht die Möglichkeit, daß der den Sicherungshebel 20 am Anschlag 24 der Verstellhülse 21 im Form-und/oder Kraftschluß mit dem Backenstellglied 9 haltende Hebelarm 20.2 in Richtung der vom Anschlag 24 auf ihn ausgeübten Kraft elastisch biegbar ist, wie dies besonders im Beispiel der Fig. 7 gilt, wo der Hebelarm 20.2 wiederum durch eine Querschnittsverringerung bei 29 geschwächt und dadurch leichter als die beiden anderen Hebelarme 20.1 und 20.3 quer zu seiner Hebelarmachse biegbar ist. Im übrigen kann eine derartige elastische Nachgiebigkeit der Hebelarme 20.1, 20.2 dazu dienen, fertigungsbedingte Toleranzen auszugleichen und sicherzustellen, daß der einerseits im Form- und/oder Kraftschluß am Backenstellglied 9 stehende Sicherungshebel 20 andererseits auch wirklich dem ihm bei der entsprechenden Stellung der Verstellhülse 21 zugeordneten Anschlag 24 anliegt.

Handelt es sich beim Sicherungshebel 20 um einen im wesentlichen zweiarmigen Hebel, so erfolgt die Anlage des Sicherungshebels 20 an den Anschlägen 23, 24 der Verstellhülse 21 im wesentlichen in jeweils einer von ihren beiden Drehrichtungen, die in den Figuren durch die Pfeile 30 angedeutet sind. So hat in Fig. 3.1 die Verdrehung der Stellhülse 21 in Richtung des Pfeiles 30 gegenüber dem Futterkörper 3 den Sicherungshebel 20 über den Anschlag 24 in den Formschluß mit dem Zahnkranz 14 bewegt, und über diesen Anschlag 24 wird der Sicherungshebel 20 auch in dieser Stellung durch die Verstellhülse 21 gehalten. Hier befindet sich also die Stellhülse 21 in ihrer der Sicherung des Backenstellglieds 9 entsprechenden Betriebsstellung. Die andere, das Backenstellglied 9 freigebende Betriebsstellung der Verstellhülse ist in Fig. 3.2 dargestellt. Die Verdrehung der Verstellhülse 21 gegenüber dem Futterkörper 3 in Richtung des Pfeiles 30 hat dazu geführt, daß der Sicherungshebel 20 durch Anlage am Anschlag 23 aus dem Formschluß am Zahnkranz 14 gelöst worden ist. Die gleichen Verhältnisse gelten sinngemäß für die Anordnungen nach den Fig. 4 und 5. Handelt es sich dagegen, wie in den Fig. 6.1 bis 7, um einen Sicherungshebel 20 mit mehreren den Anschlägen 23, 24 der Verstellhülse 21 zugeordneten Hebelarmen 20.2, 20.3, so sind die Anschläge 23, 24 als die Drehbewegung des Sicherungshebels 20 auch beispielsweise bezüglich des Drehsinns weitgehend nach Wunsch steuernde Auflaufkurven 23.1, 24.1 für die Hebelarme 20.2, 20.3 ausgebildet. Diese Auflaufkurven 23.1, 24.1 verlaufen in Umfangsrichtung der Verstellhülse 21 und geneigt zur Futterachse. Sie enden in zur Futterachse im wesentlichen senkrechten Kurvenabschnitten 23.2, 24.2, welchen die Hebelarme 20.2, 20.3 in den beiden Betriebsstellungen der Verstellhülse 21 im wesentlichen axial anliegen. In Fig. 6.1 ist durch Verdrehen der Verstellhülse 21 in Richtung des Pfeils 30 der Hebelarm 20.3 an der Verstellkurve 23.1 abgelaufen und hat dabei den Sicherungshebel 20 in Richtung des Pfeiles 31 verschwenkt und seinen Formschluß mit dem Zahnkranz 14 aufgehoben. Im Fall der Fig. 6.2 dagegen ist die Verstellhülse 21 entgegengesetzt in Richtung des Pfeiles 30 verdreht worden, wobei der Hebelarm 20.2 an der Auflaufkurve 24.1 abgelaufen ist und dabei den Hebelarm 20.1 in den Formschluß mit dem Zahnkranz 14 gebracht hat. In beiden dargestellten Fällen, welche die Verstellhülse 21 in ihren beiden verschiedenen Betriebsstellungen zeigen, bedarf es zur Einhaltung der jeweiligen Stellung des Sicherungshebels 20 praktisch kaum nennenswerter Stellkräfte in Umfangsrichtung der Verstellhülse 21, da die Kraftwechselwirkung zwischen der Verstellhülse 21 und dem ihr jeweils in den Kurvenabschnitten 23.2, 24.2 anliegenden Hebelarm 20.2, 20.3 im wesentlichen axial erfolgt, diese Kräfte also nicht als Stellkräfte an der Verstellhülse 21 in Erscheinung treten, wenn die Verstellhülse 21 nur drehbar, aber axial unverschiebbar am Futterkörper 3 geführt ist. Auch hier kann entsprechend Fig. 7 die elastische Verformbarkeit des bei der Sicherung des Zahnkranzes 14 am Anschlag 24 wirksamen Hebelarms 20.2 zum Ausgleich von Fertigungstoleranzen dienen.

Abgesehen von diesen federnden Eigenschaften der Hebelarme 20.1, 20.2 besteht aber auch die Möglichkeit, durch ein eigens dafür vorgesehenes Federglied den Sicherungshebel 20 zumindest in der seinem Form-und/oder Kraftschluß mit dem Backenstellglied 9 entsprechenden Stellung zu beaufschlagen und mit dieser Federkraft in seiner jeweiligen Stellung zu halten. Im Ausführungsbeispiel nach den Fig. 1 bis 3 und 5 ist dieses Federglied Teil der Rasteinrichtung, nämlich die Rastfeder 18, die zugleich die Betriebsstellungen der Verstellhülse 21 und der Kupplungshülse 6 am Futterkörper 3 festlegt. Durch den Rastvorgang beaufschlagt das Federglied 18 die Verstellhülse 21 in derjenigen Drehrichtung, in der sie über ihren Anschlag 24 den Sicherungshebel 20 in die das Backenstellglied 9 sichernde Stellung verschwenkt.

Jedoch kann das Federglied auch unmittelbar zwischen dem Sicherungshebel 20 und der Verstellhülse 21 angeordnet sein, wie dies die Fig. 4 zeigt. Hier ist das Federglied als in Richtung der Futterachse wirkender und in dieser Richtung auf Biegung beanspruchter Federarm 32 des Sicherungshebels 20 ausgebildet, der ein Drehmoment auf den Sicherungshebel 20 in Richtung des Pfeiles 33 ausübt und dadurch den Sicherungshebel 20 nur fester in den Formschluß am Zahnkranz 14 drückt.

Diese Federglieder 18, 32, aber auch die früher schon beschriebene elastische Verformbarkeit eines oder mehrerer der Hebelarme 20.1, 20.2 des Sicherungshebels 20 bieten darüber hinaus den Vorteil, daß der am Zahnkranz 14 angreifende Hebelarm 20.1 mit seinem Zahn bzw. seinen Zähnen 26 unter der Beaufschlagung durch die Federkraft auch dann schließlich von selbst in den Zahnlücken des Zahnkranzes 14 zum endgültigen Eingriff kommt, wenn sich beim Verdrehen der Verstellhülse 21 in die das Backenstellglied 9 sichernde Betriebsstellung die Zähne 26 des Sicherungshebels 20 zunächst nicht mit den Zahnlücken des Zahnkranzes 14 decken und daher Zahn auf Zahn zu stehen kommt. Im Bohrbetrieb reichen dann nämlich die im Bohrfutter auftretenden Vibrationen aus, eine gegenseitige Verstellung von Backenstellglied 9 und Futterkörper 3 so weit zu bewirken, daß die Zähne des Sicherungshebels unter der Wirkung der erwähnten Federkraft in die Zahnlücken des Zahnkranzes einrasten können.

In der Wand der Verstellhülse 21 ist eine den Sicherungshebel 20 aufnehmende Tasche 35 ausgespart. Die Anschläge 23, 24 für den Sicherungshebel 20 werden von den Randwandungen dieser Tasche 35 gebildet. Im übrigen ist im Ausführungsbeispiel nach den Fig. 3, 3.1 und 3.2 die Anordnung so getroffen, daß der Futterschlüssel 12 nur dann am Futterkörper 3 angesetzt werden kann, wenn sich die Verstellhülse 21 nicht in ihrer das Backenstellglied 9 gegen Verdrehung sichernden Betriebsstellung befindet. Nur dann nämlich gibt die Verstellhülse 21 durch ein Fenster 36 in ihrer Wand hindurch die Schlüsselaufnahme 13 frei. Der Futterschlüssel 12 kann also solange nicht zum Drehen des Backenstellglieds 9 benutzt werden, wie dieses durch den Sicherungshebel 20 gegen Verdrehen gesperrt ist.

**Ansprüche**

1.   Bohrfutter, insbesondere Hammerbohrfutter, mit einem Futterkörper (3), der eine Werkzeugaufnahme (1) für ein Bohrwerkzeug bildet, mit Futterbacken (8), die zentrisch zur Futterachse verstellbar sind und das Bohrwerkzeug in der Werkzeugaufnahme (1) halten, ferner mit einem die Futterbakken (8) betätigenden Bakkenstellglied (9), das koaxial am Futterkörper (3) drehbar und axial unverschiebbar geführt ist, und mit einer Verstellhülse (21), die in einer am Futterkörper (3) koaxialen Führung in zwei Betriebsstellungen einstellbar ist, von welchen in der einen das Bakkenstellglied (9) frei verdrehbar und in der anderen gegen unerwünschte Verdrehungen gesichert ist, dadurch gekennzeichnet, daß zur Sicherung des Bakkenstellglieds (9) ein Sicherungshebel (20) vorgesehen ist, der am Futterkörper (3) um eine zur Futterachse etwa radiale Schwenkachse (22) drehbar gelagert ist, und daß die zwischen ihren beiden Betriebsstellungen verdrehbare Verstellhülse (21) für jede Drehrichtung mindestens einen Anschlag (23, bzw. 24) aufweist, der in der ihm zugeordneten Drehrichtung am Sicherungshebel (20) zur Anlage kommt, wodurch die Verstellhülse (21) beim Verdrehen den Sicherungshebel (20) verschwenkt und in ihren Betriebsstellungen entweder ohne Verbindung oder im Form- und/oder Kraftschluß mit dem Backenstellglied (9) hält.

2. Bohrfutter nach Anspruch 1, dadurch gekennzeichnet, daß der Sicherungshebel (20) als mindestens zweiarmiger Hebel ausgebildet ist und mit nur einem Hebelarm (20.1) am Bakkenstellglied (9) zum Angriff kommt.

3. Bohrfutter nach Anspruch 2, dadurch gekennzeichnet, daß der am Backenstellglied (9) angreifende Hebelarm (20.1) eine zur Schwenkachse (22) des Sicherungshebels (20) exzentrische Klemmfläche (25) zur kraftschlüssigen Anlage am Backenstellglied (9) aufweist.

4. Bohrfutter nach Anspruch 2, dadurch gekennzeichnet, daß der am Backenstellglied (9) angreifende Hebelarm (20.1) mit mindestens einem Sperrzahn (26) versehen ist und damit formschlüssig in die Lücken eines am Backenstellglied (9) vorgesehenen Zahnkranzes (14) greift.

5. Bohrfutter nach Anspruch 4, dadurch gekennzeichnet, daß der am Backenstellglied (9) angreifende Hebelarm (20.1) als in der einen oder anderen Drehrichtung des Zahnkranzes (14) wirkende Sperrklinke ausgebildet und dazu der Sperrzahn (26) in der betreffenden Drehrichtung vor der Schwenkachse (22) des Sicherungshebels (20) sitzt.

6. Bohrfutter nach Anspruch 4 oder 5, dadurch gekennzeichnet, daß der am Backenstellglied (9) zum Angriff kommende Hebelarm (20.1) etwa entgegen der Richtung des Eingriffs seines Sperrzahns (26) in den Zahnkranz (14), also im wesentlichen quer zur Hebelarmachse, elastisch biegbar ist.

7. Bohrfutter nach einem der Ansprüche 2 bis 6, dadurch gekennzeichnet, daß der den Sicherungshebel (20) am Anschlag (24) der Verstellhülse (21) im Form- und/oder Kraftschluß mit dem Backenstellglied (9) haltende Hebelarm (20.2) in Richtung der vom Anschlag (24) auf ihn ausgeübten Kraft elastisch biegbar ist.

8. Bohrfutter nach einem der Ansprüche 2 bis 7, dadurch gekennzeichnet, daß bei mehreren den Anschlägen (23, 24) der Verstellhülse (21) zugeordneten Hebelarmen (20.2, 20.3) die Anschläge (23, 24) als die Drehbewegung des Sicherungshebels (20) steuernde und ihn in seinen Endstellungen fixierende Auflaufkurven (23.1, 24.1) für die Hebelarme (20.2, 20.3) ausgebildet sind.

9. Bohrfutter nach Anspruch 8, dadurch gekennzeichnet, daß die Auflaufkurven (23.1, 24.1) zunächst in Umfangsrichtung der Verstellhülse (21) geneigt zur Futterachse verlaufen und in zur Futterachse im wesentlichen senkrechten Abschnitten (23.2, 24.2) enden, welchen die Hebelarme (20.2, 20.3) in den beiden Betriebsstellungen der Verstellhülse (21) axial anliegen.

10. Bohrfutter nach einem der Ansprüche 1 bis 9, dadurch gekennzeichnet, daß der Sicherungshebel (20) zumindest in der seinem Form- und/oder Kraftschluß mit dem Backenstellglied (9) entsprechenden Stellung unter der Kraft eines ihn in dieser Stellung haltenden Federgliedes (18, 32) steht.

11. Bohrfutter nach Anspruch 10, dadurch gekennzeichnet, daß das Federglied (18) die Verstellhülse (21) in derjenigen Drehrichtung beaufschlagt, in der die Verstellhülse (21) über ihren Anschlag (24) den Sicherungshebel (20) in die das Backenstellglied (9) sichernde Stellung verschwenkt.

12. Bohrfutter nach Anspruch 10, dadurch gekennzeichnet, daß das Federglied (32) unmittelbar zwischen dem Sicherungshebel (20) und der Verstellhülse (21) angeordnet ist.

13. Bohrfutter nach Anspruch 12, dadurch gekennzeichnet, daß das Federglied (32) als in Richtung der Futterachse wirkender und in dieser Richtung auf Biegung beanspruchter Federarm ausgebildet ist.

14. Bohrfutter nach einem der Ansprüche 1 bis 13, dadurch gekennzeichnet, daß in der Wand der Verstellhülse (21) eine den Sicherungshebel (20) aufnehmende Aussparung in Form einer Tasche (35) und/oder eines Fensters vorgesehen ist, und daß die Anschläge (23, 24) für den Sicherungshebel (20) von den Randwandungen der Tasche (35) bzw. des Fensters gebildet sind.

15. Bohrfutter nach einem der Ansprüche 1 bis 14, mit einer Schlüsselaufnahme (13) im Futterkörper (3) für einen das Backenstellglied (9) betätigenden Futterschlüssel (12), dadurch gekennzeichnet, daß in der Wand der Verstellhülse (21) ein Fenster (36) ausgespart ist, das die Schlüsselaufnahme (13) nur in derjenigen Betriebsstellung der Verstellhülse (21) freigibt, in der diese den Sicherungshebel (20) ohne Verbindung mit dem Backenstellglied (9) hält.

## Claims

1. Drill chuck, in particular a hammer drill chuck, having a chuck body (3) forming a tool seat (1) for a drill tool, with chuck jaws (8) which are adjustable centrally to the chuck axis and hold the drill tool in the tool seat (1), further having a jaw actuator (9) which actuates the chuck jaws (8) and which is guided rotatably and axially non-displaceably and coaxially on the chuck body (3), and having an adjusting sleeve (21), which can be set to two operating positions in a coaxial guide on the chuck body (3), the jaw actuator (9) being freely rotatable in the one operating position and locked against undesirable rotation in the other, characterised in that to lock the jaw actuator (9) a locking lever (20) is provided which is rotatably mounted on the chuck body (3) about a pivotal axis (22) approximately radial to the chuck axis, and in that the adjusting sleeve (21) rotatable between its two operating positions has for each direction of rotation at least one stop (23 and 24 respectively), which bears on the locking lever (20) in its associated direction of rotation, whereby the adjusting sleeve (21), when rotated, pivots the locking lever (20) and, in its operating positions, holds said locking lever (20) either without connecting to the jaw actuator (9) or with positive and/or non-positive locking therewith.

2. Drill chuck according to claim 1, characterised in that the locking lever (20) is formed as a lever with at least two arms, and is applied to the jaw actuator (9) with only one lever arm (20.1).

3. Drill chuck according to claim 2, characterised in that the lever arm (20.1) acting on the jaw actuator (9) has a clamping face (25) which is eccentric to the pivotal axis (22) of the locking lever (20) for non-positive bearing on the jaw actuator (9).

4. Drill chuck according to claim 2, characterised in that the lever arm (20.1) acting on the jaw actuator (9) has at least one locking tooth (26) and engages therewith with positive locking in the gaps of a toothed rim (14) provided on the jaw actuator (9).

5. Drill chuck according to claim 4, characterised in that the lever arm (20.1) acting on the jaw actuator (9) is formed as a catch operating in one or other of the directions of rotation of the toothed rim (14), and to this end the locking tooth (26) rests in front of the pivotal axis (22) of the locking lever (20) in the respective direction of rotation.

6. Drill chuck according to claim 4 or 5, characterised in that the lever arm (20.1) acting on the jaw actuator (9) is resiliently flexible for example in the opposite direction to the engagement of its locking tooth (26) in the toothed rim (14), i.e. substantially transversely to the lever arm axis.

7. Drill chuck according to one of claims 2 to 6, characterised in that the lever arm (20.2) holding the locking lever (20) against the stop (24) of the adjusting sleeve (21) with positive or non-positive locking with the jaw actuator (9) is resiliently flexible in the direction of the force exerted thereon by the stop (24).

8. Drill chuck according to one of claims 2 to 7, characterised in that when a plurality of lever arms (20.2, 20.3) are associated with the stops (23, 24) of the adjusting sleeve (21), the stops (23, 24) are formed as stop cams (23.1, 24.1) for the lever arms (20.2, 20.3) controlling the rotation of the locking lever (20) and fixing it in its end positions.

9. Drill chuck according to claim 8, characterised in that the stop cams (23.1, 24.1) at first run in the circumferential direction of the adjusting sleeve (21), inclined towards the chuck axis, and end in sections (23.2, 24.2) which are substantially vertical to the chuck axis and which the lever arms (20.2, 20.3) axially abut in the two operating positions of the adjusting sleeve (21).

10. Drill chuck according to one of claims 1 to 9, characterised in that, at least in the position corresponding to its positively and/or non-positively locking engagement with the jaw actuator (9), the locking lever (20) is under the force of a spring member (18, 32) which holds it in this position.

11. Drill chuck according to claim 10, characterised in that the spring member (18) actuates the adjusting sleeve (21) in the direction of rotation in which the adjusting sleeve (21), via its stop (24), pivots the locking lever (20) into the position locking the jaw actuator (9).

12. Drill chuck according to claim 10, characterised in that the spring member (32) is mounted directly between the locking lever (20) and the adjusting sleeve (21).

13. Drill chuck according to claim 12, characterised in that the spring member (32) is formed as a spring arm acting in the direction of the chuck axis and stressed by bending in this direction.

14. Drill chuck according to one of claims 1 to 13, characterised in that a recess in the form of a pocket (35) and/or of a window for receiving the locking lever (20) is provided in the wall of the adjusting sleeve (21), and in that the stops (23, 24) for the locking lever (20) are formed by the edge walls of the pocket (35) or of the window.

15. Drill chuck according to one of claims 1 to 14, with a key seat (13) in the chuck body (3) for a chuck key (12) to actuate the jaw actuator (9), characterised in that a window (36) is recessed in the wall of the adjusting sleeve (21) and releases the key seat (13) only in the operating position of the adjusting sleeve (21) in which the adjusting sleeve holds the locking lever (20) without connecting to the jaw actuator (9).

**Revendications**

1. Mandrin de serrage, en particulier mandrin de perçage à percussion, comprenant un corps de mandrin (3) qui constitue un logement (1) pour la fixation d'un outil de perçage, des mâchoires de serrage (8) déplaçables concentriquement par rapport à l'axe du mandrin et maintenant l'outil de perçage dans le logement (1), un élément de réglage (9) pour l'actionnement des mâchoires de serrage (8) qui est guidé coaxialement, de manière tournante et immobile dans le sens axial, sur le corps de mandrin (3), et une douille de réglage (21) qui peut être amenée, dans un guidage monté coaxialement sur le corps de mandrin (3), dans deux positions de service et permet, dans l'une de ces positions, de tourner librement l'élément de réglage des mâchoires (9) et, dans l'autre position, de le bloquer de façon à empêcher des rotations intempestives, **caractérisé par le fait** que, pour le blocage de l'élément de serrage des mâchoires (9), il est prévu un levier d'arrêt (20) monté sur le corps de mandrin (3) de façon à pouvoir tourner autour d'un axe de pivotement (22) orienté sensiblement radialement par rapport à l'axe du mandrin; et que la douille de réglage (21) déplaçable entre ses deux positions de service comprend pour chaque sens de rotation au moins une butée (23 et respectivement 24) qui s'applique, dans la direction de rotation qui lui est associée, contre le levier d'arrêt (20), ce qui a pour effet que la douille de réglage (21), en tournant, fait pivoter le levier d'arrêt (20) et le maintient, dans ses positions de service, soit séparé de l'élément de réglage des mâchoires (9), soit en liaison à engagement positif et/ou par adhérence avec ledit élément de réglage des mâchoires (9).

2. Mandrin de serrage selon la revendication 1, caractérisé par le fait que le levier d'arrêt (20) est conformé au moins en levier à deux bras et que seul un bras de levier (20.1) agit sur l'élément de réglage des mâchoires (9).

3. Mandrin de serrage selon la revendication 2, caractérisé par le fait que le bras de levier (20.1) agissant sur l'élément de réglage des mâchoires (9) présente, pour l'application par adhérence contre l'élément de réglage des mâchoires (9), une surface de serrage (25) excentrée par rapport à l'axe de pivotement (22) du levier d'arrêt (20).

4. Mandrin de serrage selon la revendication 2, caractérisé par le fait que le bras de levier (20.1) agissant sur l'élément de réglage des mâchoires (9) comporte au moins un cliquet d'arrêt (26) qui s'enclenche à engagement positif dans les creux d'une couronne dentée (14) prévue sur l'élément de réglage des mâchoires (9).

5. Mandrin de serrage selon la revendication 4, caractérisé par le fait que le bras de levier (20.1) agissant sur l'élément de réglage des mâchoires (9) est conformé en cliquet d'arrêt actif dans l'une ou l'autre des directions de rotation de la couronne dentée (14) et que, à cet effet, le cliquet d'arrêt (26) se situe, dans le sens de rotation considéré, devant l'axe de pivotement (22) du levier d'arrêt (20).

6.  Mandrin de serrage selon l'une des revendications 4 ou 5, caractérisé par le fait que le bras de levier (20.1) agissant sur l'élément de réglage des mâchoires (9) peut fléchir élastiquement à peu près dans le sens opposé de l'engrènement de son cliquet (26) avec la couronne dentée (14), c'est-à-dire sensiblement transversalement à l'axe du bras de levier.

7.  Mandrin de serrage selon l'une des revendications 2 à 6, caractérisé par le fait que le bras de levier (20.2) qui, en contact avec la butée (24) de la douille de réglage (21), assure la liaison à engagement positif et/ou par adhérence entre le levier d'arrêt (20) et l'élément de réglage des mâchoires (9) peut fléchir élastiquement dans la direction de la force exercée sur lui par la butée (24).

8.  Mandrin de serrage selon l'une des revendications 2 à 7, caractérisé par le fait que, dans le cas de plusieurs bras de levier (20.2, 20.3) associés aux butées (23, 24) de la douille de réglage (21) , les butées (23, 24) sont réalisées sous la forme de cames d'arrêt (23.1, 24.1) pour les bras de levier (20.2, 20.3), qui commandent le mouvement de rotation du levier d'arrêt (20) et le fixent dans ses positions de fin de course.

9.  Mandrin de serrage selon la revendication 8, caractérisé par le fait que les cames d'arrêt (23.1, 24.1) s'étendent tout d'abord, dans le sens circonférentiel de la douille de réglage (21), en oblique par rapport à l'axe du mandrin et se terminent par des sections (23.2, 24.2) sensiblement perpendiculaires à l'axe du mandrin contre lesquelles les bras de levier (20.2, 20.3) s'appliquent axialement dans les deux positions de service de la douille de réglage (21).

10. Mandrin de serrage selon l'une des revendications 1 à 9, caractérisé par le fait que, au moins dans la position correspondant à sa liaison à engagement positif et/ou par adhérence avec l'élément de réglage des mâchoires (9), le levier d'arrêt (20) est soumis à la force d'un élément élastique (18, 32) qui le maintient dans cette position.

11. Mandrin de serrage selon la revendication 10, caractérisé par le fait que l'élément élastique (18) sollicite la douille de réglage (21) dans la direction de rotation dans laquelle ladite douille de réglage (21) provoque, par l'intermédiaire de sa butée (24), le pivotement du levier d'arrêt (20) dans la position de blocage de l'élément de réglage des mâchoires (9).

12. Mandrin de serrage selon la revendication 10, caractérisé par le fait que l'élément élastique (32) est disposé directement entre le levier d'arrêt (20) et la douille de réglage (21).

13. Mandrin de serrage selon la revendication 12, caractérisé par le fait que l'élément élastique (32) est conformé en bras de ressort agissant dans la direction de l'axe du mandrin et travaillant en flexion dans cette direction.

14. Mandrin de serrage selon l'une des revendications 1 à 13, caractérisé par le fait que dans la paroi de la douille de réglage (21) est prévu un évidement sous la forme d'une poche (35) et/ou d'une fenêtre qui reçoit le levier d'arrêt (20); et que les butées (23, 24) pour le levier d'arrêt (20) sont constituées par les parois périphériques de la poche (35) et respectivement de la fenêtre.

15. Mandrin de serrage selon l'une des revendications 1 à 14, comprenant un logement de clé (13) dans le corps de mandrin (3) pour la mise en place d'une clé de mandrin (12) actionnant l'élément de réglage des mâchoires (9), caractérisé par le fait que dans la paroi de la douille de réglage (21) est évidée une fenêtre (36) qui ne dégage le logement de clé (13) que dans la position de service de la douille de réglage (21) dans laquelle celle-ci maintient le levier d'arrêt (20) à l'écart de l'élément de réglage des mâchoires (9).

Fig.2

Fig.1

Fig. 3.1

Fig. 3.2

Fig.3

Fig. 6.1

Fig. 4

Fig. 6.2

Fig.5

Fig. 7